Europäisches Patentamt

**European Patent Office**

Office européen des brevets

(11) Publication number: **0 281 944 B1**

(12) **EUROPEAN PATENT SPECIFICATION**

(45) Date of publication of patent specification: **02.09.92**

(21) Application number: **88103271.8**

(22) Date of filing: **03.03.88**

(51) Int. Cl.⁵: **B60K 41/14**, B60K 41/02, H03K 7/08

(54) **Pulse width modulation technique for a valve in a continuously variable transmission.**

(30) Priority: **13.03.87 US 25477**

(43) Date of publication of application:
**14.09.88 Bulletin 88/37**

(45) Publication of the grant of the patent:
**02.09.92 Bulletin 92/36**

(84) Designated Contracting States:
**DE FR GB IT SE**

(56) References cited:
EP-A- 0 207 603
DE-A- 2 732 298
FR-A- 2 485 650
US-A- 3 803 472

PATENT ABSTRACTS OF JAPAN, vol. 5, no. 15 (E-43)[687], 29th January 1981; & JP-A-55 143 826 (MITSUBISHI DENKI K.K.) 10-11-1980

(73) Proprietor: **Borg-Warner Automotive, Inc.**
**3001 W. Big Beaver Road**
**Troy Michigan 48084(US)**

(72) Inventor: **Petzold, Werner Paul**
**6853 West Leland Avenue**
**Harwood Heights, Ill. 60656(US)**

(74) Representative: **Dipl.-Ing. H. Hauck, Dipl.-Ing. E. Graalfs, Dipl.-Ing. W. Wehnert, Dr.-Ing. W. Döring**
**Mozartstrasse 23**
**W-8000 München 2(DE)**

## Description

The present invention generally relates to the control system art. More particularly, the present invention relates to the provision of signals for control purposes, and especially to providing double edge modulated pulse signals for control purposes in a continuously variable transmission system.

Examples of the operation and construction of continuously variable transmissions (CVT's), may be found in U. S. Patent No. 4,522,086, entitled "Control System for Continuously Variable Transmission" and U. S. Patent No. 4,458,318, entitled "Control Arrangement for a Variable Pulley Transmission."

The operation and construction of hydraulic control systems for use in CVT's are shown generally by U. S. Patent No. 3,115,049 -- Moan -- and U. S. Patent No. 4,152,947 -- Van Deursen et al. Other patents provide additional improvements in the continual variable transmission art including, EP-A-104033 "Hydraulic Control System for a Continuously Variable Transmission" and US-A-4 648 496 "Clutch Control System for a Continuously Variable Transmission".

The last patent described above deals with a control system whereby the clutch is regulated by means of a pulse width modulated signal which is not further explained.

Due to the use of control valves and the nature of the hydraulic systems utilized for various control applications in the above identified patents, the operation frequency for any pulse width modulated signal utilized therein may be unduly limited. For example, in the various CVT applications mentioned above, it has been found that a pulse width modulation signal may not have an operation frequency greater than about 100 Hz because of the physical constraints of the electro-hydraulic valve system in use. It is envisioned that other control systems outside of the continuously variable transmission art may likewise share similar physical constraints. However, it may be desirable, particularly from a system response speed viewpoint, to provide an update to a digital implementation of a PWM control signal more frequently than the frequency limited by their physical constraints.

Accordingly, a principal object of the present invention lies in providing an improved pulse width modulation signal technique which generally overcomes the deficiencies of the prior art.

This object is achieved in a method as defined in claim 1.

Generally, the present invention provides a technique for increasing a digital control system sample rate and thereby improve system response without increasing the system modulation rate. The system of the present invention effectively provides update information twice per pulse modulation cycle. The updated information alternately controls the OFF/ON pulse time and the ON/OFF pulse time. Through the use of this alternate modulation technique, both the leading and trailing edges of the modulating pulse may be time varied to provide a desired duty cycle for control in the particular control system application.

Additional and further objects and advantages of the present invention will become apparent from the following detailed description and accompanying drawings.

The novel features of the present invention are set forth with particularity in the appended claims. The invention, together with the objects and advantages thereof, may be understood more fully by reference to the following detailed description taken in conjunction with the accompanying drawings in which like reference numerals are used to indicate like elements and of which:

Fig. 1 is a block diagram representation of a continuously variable transmission system;

Fig. 2 is an illustration of a standard pulse width modulated control signal for use in systems such as that of Fig. 1;

Fig. 3 is an exemplary waveform representation of a double edge modulated control signal for use in accordance with the present invention; and

Fig. 4 is a flow chart illustrating the operation of a control system for use of a double edge pulse width modulated signal of the present invention.

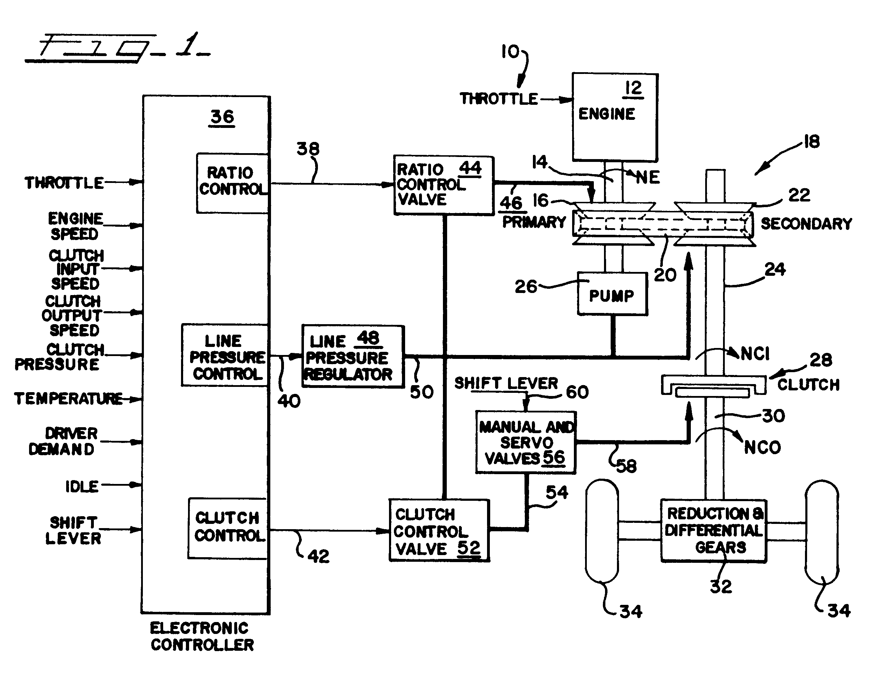

As shown in FIG. 1, a throttle signal 10 controls the operation of an engine 12 which transmits torque via a shaft 14 to a primary pulley 16 in a CVT 18. In a typical embodiment, a flywheel and damping arrangement may be included on the shaft 14 between the engine 12 and the primary pulley 16. An elastomeric or metal belt 20 connects the primary pulley 16 to a secondary pulley 22 to transmit torque to a second shaft 24. A pump 26 may also be driven by the first shaft 14 to provide line pressure for the hydraulic system and the controls of the CVT 18.

The second shaft 24 drives the input to a clutch 28 which in turn provides a torque to a third shaft 30. The third shaft 30 drives a reduction differential gear arrangement 32 as a drive line to provide power to the vehicle wheels 34.

In operation, an electronic controller 36 receives a multiplicity of inputs including throttle, engine speed, clutch input speed, clutch output speed, clutch pressure, temperature, driver demand, idle, shift lever and other information input signals as shown at the left of FIG. 1. The electronic controller 36 operates in a logical fashion to provide a ratio control signal on a line 38, a line pressure control signal on a line 40 and a clutch control signal on a line 42. The signal on the line 38 to a ratio control valve 44 controls the hydraulic pressure on a line 46 to the primary pulley 16 of the CVT 18 to control the ratio between the primary pulley 16 and the secondary pulley 22, i.e., the belt ratio. The signal on the line 40 communicates with a line pressure regulator 48 which via a line 50 provides line pressure from fluid flow of pump 26 to the ratio control valve 44 and a clutch control valve 52. The output of the line pressure regulator on the line 50 also controls the pressure at the secondary pulley 22 to ensure that the belt 20 does not slip. The output signal on the line 42 to the clutch control valve 52 controls the output of the clutch control valve 52 on a line 54 to the manual and servo valves 56 which controls the fluid flow on the line 58 to the clutch 28. This is the signal which controls or which provides the pressure at the clutch 28 and hence regulates the torque transfer between the second shaft 24 and the third shaft 30.

A shift lever signal on a line 60 provides an additional control of the manual and servo valves 56. When the shift lever signal on the line 60 indicates that the vehicle is in a neutral or park mode, the manual control within the valve arrangement 56 is closed. This prevents fluid from flowing to the clutch 28 and thus prevents any torque transfer through the clutch 28 when the vehicle is in the neutral or park mode.

A first arrow NE (N = speed; E = engine) on the first shaft 14 indicates one acceptable point of measurement for engine speed. A second arrow NCI (CI = clutch input) on the second shaft 24 indicates an acceptable point of measurement for the clutch input speed. A third arrow NCO (CO = clutch output) indicates an acceptable point of measurement for the clutch output speed, which corresponds to vehicle speed. Those skilled in the art will recognize that the various speed values may be accurately obtained at other locations as desired.

The ratio of NE to NCI will correspond to and provide a measure of the transmission belt ratio. The difference between NCI and NCO correspondingly provides a measure of the slippage at the clutch 28. When NCI equals NCO, the clutch 28 should be locked-up with no slippage.

The electronic controller 36 implements the control functions for controlling the hydraulic fluid flow to the primary sheave actuator 16 by means of a pulse width modulation (PWM)-operated electrohydraulic control valve 44. The pressure from this flow moves the primary actuator which forces the belt to move in the primary and secondary pulleys. Movement of the belt creates a ratio change in the CVT.

Also, the line pressure regulator 48 also regulates the line pressure in line 50 by means of a pulse width modulation (PWM)-operated electrohydraulic control. Likewise, clutch control valve 52 comprises in part a pulse width modulation (PWM)-operated electrohydraulic control valve.

It has been found in application of systems such as that of Fig. 1 that the PWM signal used to control the various electrohydraulic valves may not exceed approximately 100 Hz due to the response time of the valves themselves. The electrohydraulic valve response degrades substantially as the frequency is increased above 100 Hz.

However, it is desirable to update the system and generate a duty cycle responsive to the sensed update characteristics to provide desired control more frequently than at a 100 Hz frequency.

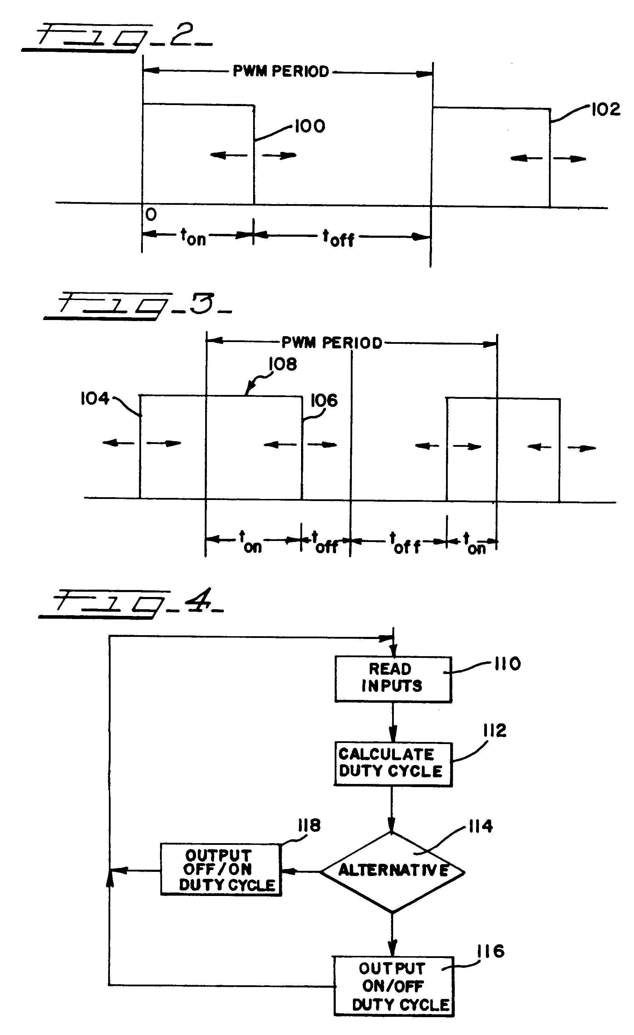

Referring now to Fig. 2, therein is shown a typically pulse width modulation signal for use in the control system of Fig. 1 or other control systems. As shown therein, a first pulse 100 begins at a time "0" and terminates a period $T_{ON}$ later. The remaining portion of the PWM period represents a non-pulse interval illustrated as $T_{OFF}$. At the conclusion of a PWM period, a second pulse 102 beings and endures for a set time. The termination of the pulse 100 or the pulse 102 may be varied, or modulated, as desired. Variation in the length of the pulse within the PWM period provides a duty cycle given as a percent ratio of $T_{ON}$ to $T_P$, the PWM period. However, in Fig. 2 the leading edge of the pulse in any PWM period coincides with the initiation of the PWM period itself.

As mentioned above, the pulse width modulation frequency in control systems for the continuously variable transmission of the preferred embodiment is limited to approximately 100 Hz. Accordingly, the PWM period illustrates in Fig. 2 would be approximately 10 ms.

Referring now to Fig. 3, therein is shown an exemplary waveform illustrative of the double edge modulation for a pulse width modulation control signal in accordance with the present invention. As shown in Fig. 3, the PWM period has remained constant from that of the traditional PWM signal illustrated in Fig. 2. However, the update or sampling period has been cut in half which corresponds to a doubling in update frequency. This may be accomplished as shown by modulation of both the leading edge 104 and the trailing edge 106 of a control pulse 108. The duty cycle for each pulse is now calculated as a function of the $T_{ON}$ for each half period of the PWM signal.

Referring now to Fig. 4, therein is shown a flow chart for operation of a control system according to the double edge modulation technique of the present invention. The system operation begins at a block 110 at which the system reads the input signals. Based upon the input signals read at the block 110, the system then calculates the appropriate duty cycle at a block 112. The system then advances to a decision block 114 at which it alternates between a first output duty cycle block 116 which controls the ON to OFF pulse edge and a second output duty cycle block 118 which controls the OFF to ON pulse edge. The system then loops back to read the inputs again. Thus, if this system loop is accomplished in 5 ms., a pulse width modulation cycle of 10 ms. will be achieved. However, the duty cycle information will be updated twice per pulse modulation period rather than once per period as with the traditional modulation signal illustrated in Fig. 2.

Accordingly, the present invention provides a pulse width modulation technique which may be utilized in continuously variable transmission systems, in which it is desired to increase the sampling rate without increasing the on and off rate of particular physical devices, such as electrohydraulic valves. Thus the sample rate may be increased and, accordingly, the system response decreased desirably.

## Claims

1.  A method for generating a pulse width modulation control signal which is delivered to a pulse width modulation controlled valve in a continuously variable transmission system, said control signal comprising a train of pulses at a selected frequency, including:
    controlling the location of the trailing edge (106) of the pulse in one portion of each cycle period; and
    controlling the location of the leading edge (104) of the pulse in a second portion of each cycle period.

2.  The method of claim 1, including:
    sensing selected system parameters (at block 110);
    calculating an appropriate duty cycle of the pulse (at block 112);
    terminating said pulse (at block 116) at a time determined by said sensed system parameters to define the trailing edge;
    sensing said selected system parameters (at block 110); and
    initiating a pulse (at block 118) at a time determined by said sensed system parameters to define the leading edge.

3.  The method of Claim 2 wherein said steps of initiating and terminating are alternated (at block 114) after each sensing step during system operation.

## Patentansprüche

1.  Verfahren zum Erzeugen eines impulsbreitenmodulierten Steuersignals für ein durch Impulsbreitenmodulation gesteuertes Ventil in einem stufenlos veränderlichen Getriebe, wobei das Steuersignal aus einem Impulszug mit einer bestimmten Frequenz besteht, in dem die Lage der Hinterflanke (106) des Impulses in einem Abschnitt jeder Periode und die Lage der Vorderflanke (104) des Impulses in einem zweiten Abschnitt jeder Periode gesteuert wird.

2.  Verfahren nach Anspruch 1, bei dem bestimmte Systemparameter abgefragt werden (im Block 110); ein passender Arbeitszyklus des Impulses berechnet wird (im Block 112); der Impuls zu einem von den abgefragten Parametern bestimmten Zeitpunkt beendet wird (im Block 116) um die Hinterflanke zu definieren; bestimmte Systemparameter abgefragt werden (im Block 110); und ein Impuls zu einem von den abgefragten Systemparametern bestimmten Zeitpunkt ausgelöst wird (im Block 118), um die Vorderflanke zu definieren.

3.  Verfahren nach Anspruch 2, wobei die Schritte des Auslösens und Beendens nach jedem Abfrageschritt während des Systembetriebes abwechselnd vorgenommen werden (im Block 114).

## Revendications

1.  Procédé pour produire un signal de commande à largeur d'impulsion modulée qui est délivré à une soupape commandée par largeur d'impulsion modulée dans un système de transmission variable en continu, le signal de commande comprenant un train d'impulsions à une fréquence sélectionnée, comportant les étapes consistant à :
    commander l'emplacement du front descendant (106) de l'impulsion dans une première partie de chaque période cyclique, et
    commander l'emplacement du front montant (104) de l'impulsion dans une seconde partie de chaque période cyclique.

2.  Procédé selon la revendication 1 comportant les étapes consistant à :
    détecter les paramètres sélectionnés du système (à un pavé (110)) ;
    calculer un rapport cyclique approprié de l'impulsion (à un pavé 112) ;
    terminer l'impulsion (à un pavé 116) à un moment déterminé par les paramètres détectés du système pour définir le front descendant ;

détecter les paramètres sélectionnés du système (à un pavé 110), et

lancer une impulsion (à un pavé 118) à un moment déterminé par les paramètres détectés du système pour définir le front montant.

3. Procédé selon la revendication 2, dans lequel les étapes consistant à lancer et terminer sont modifiées (à un pavé 114) après chaque étape de détection pendant le fonctionnement du système.

FIG-1

FIG_2_

FIG_3_

FIG_4_